## Europäisches Patentamt
## European Patent Office
## Office européen des brevets

(19)

(11) Veröffentlichungsnummer: **0 032 201**
**B1**

(12)

# EUROPÄISCHE PATENTSCHRIFT

(45) Veröffentlichungstag der Patentschrift:
**10.11.82**

(51) Int. Cl.³: **B 60 J 3/00**

(21) Anmeldenummer: **80107709.0**

(22) Anmeldetag: **08.12.80**

(54) **Sonnenblende mit beleuchtetem Spiegel.**

(30) Priorität: **11.01.80 DE 3000810**

(43) Veröffentlichungstag der Anmeldung:
**22.07.81 Patentblatt 81/29**

(45) Bekanntmachung des Hinweises auf die Patenterteilung:
**10.11.82 Patentblatt 82/45**

(84) Benannte Vertragsstaaten:
**DE FR GB IT SE**

(56) Entgegenhaltungen:
**DE-A-2 730 926**
**DE-B-2 220 711**
**DE-U-8 000 562**
**US-A-3 926 470**

(73) Patentinhaber: **Gebr. Happich GmbH,
Postfach 10 02 49 Clausenbrücke 1,
D-5600 Wuppertal 1 (DE)**

(72) Erfinder: **Cziptschirsch, Kurt, Am Heckendorn 43,
D-5600 Wuppertal 2 (DE)**

## Sonnenblende mit beleuchtetem Spiegel

Die Erfindung betrifft eine Sonnenblende mit in einem Gehäuse angeordneten Spiegel, dessen Rückseite durch eine Metallplatte unter Zwischenschaltung einer wärmedämmenden Schicht abgedeckt ist und mit einer im Gehäuse angeordneten Lichtquelle.

Ein derartiges Sonnenblendenpaar ist im Personenkraftfahrzeug, Typ Cadillac Seville 1978, vorgesehen. Auf die Rückseite des Spiegels ist eine Schaumstoffschicht und darauf eine Metallplatte aus nichtrostendem Stahl geklebt. Durch diese Anordnung wird erreicht, dass die von der Lichtquelle erzeugte Wärme vom Spiegel ferngehalten wird. Als Lichtquelle dienen dabei Glühlampen, die hinter seitlich vom Spiegel angeordneten Fenstern angebracht sind. Die so gebildete Einheit aus Spiegel, Schaumstoffschicht und Metallplatte ist in eine Ausnehmung des Gehäuses eingelegt und darin dadurch befestigt, dass der Gehäuserand mittels eines erhitzten Werkzeuges bereichsweise über den Rand der Metallplatte geklappt ist. Diese bekannte Sonnenblende ist aufgrund der beschriebenen Anordnung verhältnismässig schwer und schon dadurch teuer in der Herstellung. Der hinterklebte Spiegel ist verhältnismässig umständlich herzustellen, da das Hinterkleben mehrere Arbeitsgänge erfordert, und auch die Montage ist wegen des verwendeten, nur für eine Spiegelgrösse brauchbaren Sonderwerkzeuges umständlich und teuer. Bei einer anderen bekannten Sonnenblende liegen elektrische Kontakte im Bereich der auf den Spiegel aufgeklebten elektrisch leitenden Metallplatte, so dass bei wärmebedingten Verformungen der Sonnenblende bzw. des Spiegelgehäuses ein Kurzschluss in der elektrischen Anlage eintreten kann.

Der Erfindung liegt die Aufgabe zugrunde, eine leicht herstellbare Sonnenblende mit geringem Gewicht zu schaffen, die keine Spezialvorrichtung für die Montage erfordert und eine ausreichende Wärmedämmung zwischen der Lichtquelle und dem Spiegel zu erreichen gestattet. Eine weitere Teilaufgabe besteht darin, Kurzschlüsse zwischen den elektrischen Kontakten der Lichtquelle zu vermeiden.

Gelöst wird die Aufgabe durch aus der Metallplatte hervorstehende, der Spiegelrückseite zugekehrte Sicken und durch eine Klipsverbindung des Spiegels und der Metallplatte gegenüber dem Gehäuse, wobei die Sicken so angeordnet sind, dass die Metallplatte im Bereich von Klipsnasen nachgiebig ist.

Die Sicken bilden die einzigen Berührungsflächen zwischen der Metallplatte und dem Spiegel, während der übrige Bereich zwischen der Metallplatte und dem Spiegel durch ein Luftpolster als wärmedämmende Schicht gebildet ist. Eine Klebeverbindung zwischen dem Spiegel und der Metallplatte braucht nicht vorgesehen zu werden, da beide gemeinsam über eine Klipsverbindung mit dem Gehäuse verbunden sind.

Die Klipsverbindung kann in besonders vorteilhafter Weise dadurch erreicht werden, dass zunächst der Spiegel und die Metallplatte in einen durchscheinenden Spiegelrahmen eingeklipst werden und dieser wiederum in das Gehäuse eingeklipst wird.

Um die Klipsverbindung herzustellen, bedarf es keinerlei besonderer Werkzeuge, da die Klipsverbindung durch einfaches Eindrücken der Metallplatte und des Spiegels in den Spiegelrahmen und des Spiegelrahmens in das Gehäuse bewerkstelligt werden kann. Der Lichtaustritt erfolgt durch den durchscheinenden Spiegelrahmen, wodurch ein angenehmes diffuses Licht erzeugt wird.

Um Kurzschlüsse zwischen den Kontakten der Lichtquelle zu vermeiden, ist die dem Gehäuseinnenraum zugekehrte Seite der Metallplatte mit einer nichtleitenden Beschichtung versehen, wobei die Metallplatte vorzugsweise aus Aluminium bzw. aus einer Aluminiumlegierung besteht mit einer eloxierten Oberfläche.

Da Aluminium bzw. seine Legierungen gute Wärmeleiter sind, wird hierdurch eine durch die Lichtquelle verursachte Konzentration der Wärme auf der Rückseite des Spiegels vermieden, und durch die eloxierte Oberfläche ist eine elektrisch nichtleitende Beschichtung erreicht, die Kurzschlüsse verhindert. Da eloxierte Aluminiumoberflächen einen hohen Reflexionsgrad aufweisen, ist zusätzlich gewährleistet, dass der grösste Teil der von der Lichtquelle abgestrahlten Wärme durch die Metallplatte reflektiert wird, so dass nur der nicht reflektierte Anteil von der Platte aufgenommen wird und grossflächig verteilt wird.

Weitere Einzelheiten und Vorteile der Erfindung ergeben sich aus der nachstehenden, anhand eines Ausführungsbeispiels gegebenen Beschreibung. Es zeigen

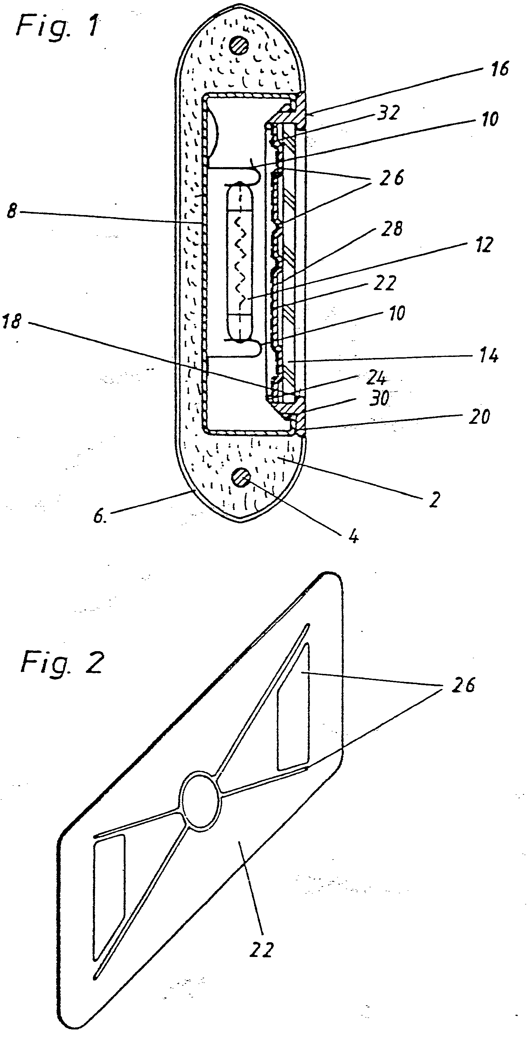

Fig. 1 einen Querschnitt durch die Sonnenblende und
Fig. 2 eine perspektivische Ansicht der an der Rückseite des Spiegels angeordneten Metallplatte.

Die Sonnenblende besteht aus einem Sonnenblendenkörper aus Schaumstoff mit einer als Drahtrahmen ausgebildeten Einlage 4. Der Sonnenblendenkörper 2 ist von einer Hüllfolie 6 umgeben. In einer Ausnehmung des Sonnenblendenkörpers 2 ist ein Gehäuse 8 angeordnet. Im Gehäuse 8 sind Soffitten 10 befestigt, die mit nicht dargestellten Leitungen zur Stromzuführung zu einer oder mehreren Glühbirnen 12 verbunden sind. Ein Spiegel 14 ist in einen Rahmen 16 eingeklipst und liegt mit seiner Vorderseite an einer umlaufenden Anlagefläche 18 an. Mit einer aussen umlaufenden Anlagefläche 20 liegt der Rahmen 16 auf dem Gehäuse 8 auf. Eine Metallplatte 22 liegt mit eingeprägten Sicken 26 an der Rückseite des Spiegels 14 an. Der Spiegel 14 und die Metallplatte 22 werden durch Klipsnasen 24 im Rahmen 16 festgehalten. Durch die Sicken 26 wird zwischen dem Spiegel 14 und der Metallplatte 22 ein Luftpolster 28 gebildet, welches wegen der geringen Wärmeleitfähigkeit der Luft eine wärmedämmende Schicht bildet. Der Rahmen 16 ist mittels Klipsnasen 30 in das Gehäuse 8 eingeklipst.

Die dem Gehäuseinnenraum zugekehrte Oberfläche der Metallplatte 22 ist mit einer elektrisch nicht leitenden Schicht 32 versehen, die vorzugsweise aus einer eloxierten Oberfläche einer Metallplatte 22 aus Aluminium bzw. einer Aluminiumlegierung besteht. Durch diese elektrisch nicht leitende Schicht 32 wird verhindert, dass bei Verformungen der Sonnenblende ein Kurzschluss zwischen den Soffitten 10 entstehen kann. Die Klipsverbindung zwischen dem Rahmen 16 und dem Gehäuse 8 kann aufgrund der leicht einhaltbaren geringen Herstellungstoleranzen klapperfrei gehalten werden. Bei der Klipsverbindung des Spiegels 14 mit dem Rahmen 16 ist dieses schwieriger zu erreichen, da Glasspiegel eine verhältnismässig grosse Dickentoleranz aufweisen. Durch die Ausbildung der Metallplatte 22 mit Sicken 26, die zu einer erheblichen Nachgiebigkeit der Metallplatte 22 im Bereich der Klipsnasen 24 führt, ist jedoch gewährleistet, dass auch im Rahmen der Dickentoleranzen von Glasspiegeln ein klapperfreier Sitz im Rahmen 16 erreicht wird.

## Patentansprüche

1. Sonnenblende mit in einem Gehäuse (8) angeordneten Spiegel (14), dessen Rückseite durch eine Metallplatte (22) unter Zwischenschaltung einer wärmedämmenden Schicht abgedeckt ist und mit einer im Gehäuse (8) angeordneten Lichtquelle (Glühbirne 12), gekennzeichnet durch aus der Metallplatte (22) hervorstehende, der Spiegelrückseite zugekehrte Sicken (26) und durch eine gemeinsame Klipsverbindung (24) des Spiegels (14) und der Metallplatte (22) gegenüber dem Gehäuse (8), wobei die Sicken so angeordnet sind, dass die Metallplatte im Bereich von Klipsnasen (24) nachgiebig ist.

2. Sonnenblende nach Patentanspruch 1, gekennzeichnet durch einen in das Gehäuse (8) einklipsbaren durchscheinenden Spiegelrahmen (16) mit darin eingeklipstem Spiegel (14) und Metallplatte (22).

3. Sonnenblende nach Patentanspruch 1 oder 2, dadurch gekennzeichnet, dass die dem Gehäuse (8) zugekehrte Seite der Metallplatte (22) eine elektrisch nichtleitende Beschichtung (32) aufweist.

4. Sonnenblende nach Patentanspruch 3, dadurch gekennzeichnet, dass die Metallplatte (22) aus Aluminium bzw. einer Aluminiumlegierung mit einer eloxierten Oberfläche (32) besteht.

## Claims

1. A sun visor including: a mirror (14) which is disposed in a casing (8) and the rear face of which is masked in such a way by a metal sheet (22) that a heat-insulating layer is interposed between them; and a light source (an incandescent bulb 12) disposed in the casing (8), characterized by protrusions (26) projecting from the metal sheet (22) towards the rear face of the mirror (14) and by a common clip-in connection (24) of the mirror (14) and af the metal sheet (22) with the casing (8), the protrusions being so arranged that the metal sheet is resilient in the region of clip-in tongues (24).

2. A sun visor according to claim 1, characterized by a transparent mirror frame (16) arranged to be clipped into the casing (8) and including the mirror (14) and the metal sheet (22) clipped into said frame.

3. A sun visor according to claim 1 or claim 2, characterized in that the rear face of the metal sheet (22) directed towards the interior of the casing (8) is provided with an electrically non-conductive coating (32).

4. A sun visor according to claim 3, characterized in that the metal sheet (22) is an aluminium, or an aluminium alloy, sheet having an anodized surface (32).

## Revendications

1. Pare-soleil comprenant un miroir (14) monté dans un boîtier (8) et dont le côté arrière est recouvert par une plaque métallique (22), avec interposition d'une couche thermiquement isolante, et une source lumineuse (ampoule 12) montée dans le boîtier (8), caractérisé par des moulures (26) tournées vers le côté arrière du miroir et en saillie sur la plaque métallique (22), et par une liaison par clipsage commune (24) du miroir (14) et de la plaque métallique (22) dans le boîtier (8), les moulures étant disposées de manière que la plaque métallique soit élastique dans la zone des nez de clipsage (24).

2. Pare-soleil selon la revendication 1, caractérisé par un cadre de miroir (16) translucide et pouvant être enclipsé dans le boîtier (8), dans lequel sont fixés par clipsage le miroir (14) et la plaque métallique (22).

3. Pare-soleil selon la revendication 1 ou 2, caractérisé en ce que le côté de la plaque métallique (22) qui est tourné vers le boîtier (8) comprend une couche (32) électriquement non conductrice.

4. Pare-soleil selon la revendication 3, caractérisé en ce que la plaque métallique (22) est constituée en aluminium ou en alliage d'aluminium dont une surface (32) est anodisée.

0 032 201

Fig. 1

Fig. 2